# EUROPEAN PATENT APPLICATION

(11) **EP 4 790 556 A1**
(43) Date of publication of application: **12.08.2026**
(21) Application number: 25223981.9
(22) Date of filing: 16.12.2025
(51) Int. Cl.: G06F 9/50

(54) **SYSTEM AND METHOD FOR RUNTIME APPLICATION RESOURCE ALLOCATION IN A VEHICLE**

(30) Priority: 05.02.2025 US 202519045682
(71) Applicant: Toyota Jidosha Kabushiki Kaisha, Toyota-shi, Aichi-ken 471-8571 (JP)
(72) Inventor: MOMOI, Akiyoshi, Tokyo, 103-0022 (JP); GOTO, Toshio, Tokyo, 103-0022 (JP); TSUKADA, Yoshikazu, Tokyo, 103-0022 (JP); MURAKAMI, Hiroshi, Tokyo, 103-0022 (JP); MASUDA, Yasutomo, Tokyo, 103-0022 (JP); KASAOKI, Seisuke, Tokyo, 103-0022 (JP)
(74) Representative: D Young & Co LLP

(57) **Abstract**

Example embodiments of the present disclosure relate to hardware resource allocation to one or more runtime applications in a vehicle. According to embodiments, a method may include: receiving, by an electronic control unit (ECU) (110), information associated with applications currently running in the vehicle, the applications being a portion of a plurality of applications; receiving, by the ECU (110), a resource profile (200), wherein the resource profile (200) may include predefined mappings of the plurality of applications, a minimum resource required by each of the plurality of applications, and a priority level of each of the plurality of applications; and allocating, by the ECU (110), the hardware resource to the currently running applications based on the resource profile (200).

## Description

### TECHNICAL FIELD

Example embodiments of the present disclosure relate to resource allocation in a vehicle, and more particularly, relate to hardware resource allocation to one or more runtime applications in the vehicle.

### BACKGROUND

Modem vehicles rely heavily on software for operations such as vehicle performance management, safety systems control, navigation, infotainment, and the like. Amongst others, runtime applications are particularly critical in the vehicle since they are often closely associated with the safety and stability of the vehicle's performance. For instance, advanced vehicle features like advanced driver assistance system (ADAS), autonomous driving, and the like, rely on runtime applications to process sensor data and make real-time (or near-real-time) decisions to control the vehicle's operations. These runtime applications often operate under stringent requirements for real-time processing and fault tolerance, thus it is important to ensure that sufficient hardware resources are always being allocated to the runtime applications. Given the limited hardware resources available in the vehicles, it is critical to effectively and efficiently allocate the hardware resources to the runtime applications in the vehicles.

### SUMMARY

Example embodiments consistent with the present disclosure effectively and efficiently allocate one or more hardware resources to one or more runtime applications in a vehicle.

According to example embodiments, a method for allocating a hardware resource in a vehicle may include: receiving, by an electronic control unit (ECU), information associated with applications currently running in the vehicle, the applications may be a portion of a plurality of applications; receiving, by the ECU, a resource profile, wherein the resource profile may include predefined mappings of the plurality of applications, a minimum resource required by each of the plurality of applications, and a priority level of each of the plurality of applications; and allocating, by the ECU, the hardware resource to the currently running applications based on the resource profile.

According to example embodiments, a device for allocating a hardware resource in a vehicle may include a memory storage storing computer-executable instructions, and a processor communicatively coupled to the memory storage. The processor may be configured to execute the instructions to: receive information associated with applications currently running in the vehicle, the applications may be a portion of a plurality of applications; receive a resource profile, wherein the resource profile may include predefined mappings of the plurality of applications, a minimum resource required by each of the plurality of applications, and a priority level of each of the plurality of applications; and allocate the hardware resource to the currently running applications based on the resource profile.

According to example embodiments, a non-transitory computer-readable recording medium may have recorded thereon instructions executable by a processor to cause the processor to perform a method to allocate a hardware resource in a vehicle. The method may include: receiving information associated with applications currently running in the vehicle, the applications may be a portion of a plurality of applications; receiving a resource profile, wherein the resource profile may include predefined mappings of the plurality of applications, a minimum resource required by each of the plurality of applications, and a priority level of each of the plurality of applications; and allocating the hardware resource to the currently running applications based on the resource profile.

Additional aspects will be set forth in part in the description that follows and, in part, will be apparent from the description, or may be realized by practice of the presented embodiments of the disclosure.

### BRIEF DESCRIPTION OF THE DRAWINGS

Features, advantages, and significance of exemplary embodiments of the disclosure will be described below with reference to the accompanying drawings, in which like reference numerals denote like elements, and wherein:
FIG. 1 illustrates a diagram of an example system configuration, according to one or more example embodiments;
FIG. 2 illustrates a diagram of an example resource profile, according to one or more example embodiments;
FIG. 3A and FIG. 3B each illustrates a diagram of an example use case, according to example embodiments;
FIG. 4 illustrates a diagram of an example method for allocating a hardware resource to one or more runtime applications in a vehicle, according to one or more example embodiments; and
FIG. 5 illustrates a diagram of example components of a device that may be configured to implement one or more example embodiments.

### DETAILED DESCRIPTION

The following detailed description of exemplary embodiments refers to the accompanying drawings. The foregoing disclosure provides illustration and description but is not intended to be exhaustive or to limit the implementations to the precise form disclosed. Modifications and variations are possible in light of the above disclosure or may be acquired from practice of the implementations. Further, one or more features or components of one embodiment may be incorporated into or combined with another embodiment (or one or more features of another embodiment). Additionally, in the flowcharts and descriptions of operations provided below, it is understood that one or more operations may be omitted, one or more operations may be added, one or more operations may be performed simultaneously (at least in part), and the order of one or more operations may be switched.

Even though particular combinations of features are recited in the claims and/or disclosed in the specification, these combinations are not intended to limit the disclosure of possible implementations. In fact, many of these features may be combined in ways not specifically recited in the claims and/or disclosed in the specification. Although each dependent claim listed below may directly depend on only one claim, the disclosure of possible implementations includes each dependent claim in combination with every other claim in the claim set.

No element, act, or instruction used herein should be construed as critical or essential unless explicitly described as such. Also, as used herein, the articles "a" and "an" are intended to include one or more items, and may be used interchangeably with "one or more." Where only one item is intended, the term "one" or similar language is used. Also, as used herein, the terms "has," "have," "having," "include," "including," or the like are intended to be openended terms. Further, the phrase "based on" is intended to mean "based, at least in part, on" unless explicitly stated otherwise. Furthermore, expressions such as "[A] and/or [B]", "at least one of [A] and [B]" or "at least one of [A] or [B]" are to be understood as including only A, only B, or both A and B.

Expressions such as "at least one processor," where configured to implement a plurality of operations, execute a plurality of instructions, etc., are to be understood as a single processor implementing the plurality of operations, etc., or each of plural processors implementing at least some (but not necessarily all) of the plurality of operations, etc.

Reference throughout this specification to "one embodiment," "an embodiment," "non-limiting exemplary embodiment," or similar language means that a particular feature, structure, or characteristic described in connection with the indicated embodiment is included in at least one embodiment of the present disclosure. Thus, the phrases "in one embodiment", "in an embodiment," "in one non-limiting exemplary embodiment," and similar language throughout this specification may, but do not necessarily, all refer to the same embodiment.

Further, the described features, advantages, and characteristics of the present disclosure may be combined in any suitable manner in one or more example embodiments. One skilled in the relevant art will recognize, in light of the description herein, that the present disclosure can be practiced without one or more of the specific features or advantages of a particular embodiment. In other instances, additional features and advantages may be recognized in certain embodiments that may not be present in all embodiments of the present disclosure.

Furthermore, the term "vehicle" described herein refers to any suitable type of vehicle in which example embodiments of the present disclosure can be implemented. For instance, the "vehicle" may refer to a motorized vehicle such as a car, a truck, a bus, a motorcycle, or any other suitable type of automobile powered by an engine, motor, or other mechanical means. Alternatively or additionally, the "vehicle" described herein may refer to a bicycle, a skateboard, and any other suitable types of non-motorized vehicle, without departing from the scope of the present disclosure.

As described above, effective hardware resource allocation to runtime applications in the vehicles is a critical aspect of the vehicle's operations. In the related art, there are two main types of resource allocation in the vehicles, i.e., static resource allocation and real-time resource allocation.

Static resource allocation refers to the allocation of resources based on pre-defined configurations, regardless of the runtime status of the applications implemented in the vehicle. For instance, a pre-defined, fixed amount of resources is always reserved for any applications that are implemented or installed in the vehicle, regardless of whether the reserved and allocated resources are required by and will be fully utilized by the applications. This type of resource allocation is inefficient and ineffective in utilizing the resources, namely, the allocated resources may be underutilized since they are allocated to applications/functions that do not require the amount of allocated resources, leading to wastage of resources. Furthermore, static resource allocation may also result in suboptimal performance of the vehicle applications and/or vehicle functionalities, since the allocated resources may not be sufficient to achieve optimal performance.

Real-time resource allocation refers to the allocation of resources based on real-time monitoring and measurements. For instance, the resources may be allocated based on real-time measurement of a time (e.g., a time period after an application has been activated, etc.), real-time measurement of a processing/execution time of an application, and the like. This type of resource allocation has higher complexity than static resource allocation, since real-time measurement requires continuously collecting and processing data from multiple sources (e.g., sensors, ECUs, etc.) in real-time (or near-real-time), which increases the complexity in designing, testing, and implementing the resource allocation mechanism. Further, this type of resource allocation may be less controllable and less predictable, since it relies on the measurement of real-time conditions. As a result, the resource allocation may vary over-dynamically (e.g., the resource allocation may rapidly change based on sensor inputs and environmental factors, etc.), increasing the risk of causing fluctuation in system performance and inability to guarantee quality of service (QoS) to the users. In addition, this type of resource allocation requires real-time measurement and real-time decision-making with respect to, for example, whether the resource allocation should be executed, how much resource should be allocated, etc. Accordingly, continuous processing is required, and the amount of allocable resources may be reduced since a portion of the resources is required for the resource allocation.

Example embodiments of the present disclosure provide a system, a method, a device, and the like, that efficiently and effectively allocate one or more hardware resources to one or more runtime applications in a vehicle. Specifically, example embodiments of the present disclosure utilize an electronic controller unit (ECU) (or a processor that implements the associated operations) to determine applications currently running in the vehicle, and then utilize a predefined resource profile to dynamically allocate resources to applications currently running in the vehicle.

Compared to static resource allocation in the related art, example embodiments of the present disclosure may avoid underutilization of allocated resources and wastage of resources, since the resources are dynamically allocated to vehicle applications according to the current runtime status of the vehicle. In addition, the vehicle applications may be allocated sufficient resources (since the amount of resources allocated to the runtime applications is based on the minimum resource requirements and priority level defined in the resource profile), thereby ensuring the consistent performance of the runtime applications.

On the other hand, example embodiments of the present disclosure also address the issues in the real-time resource allocation of the related art. Specifically, example embodiments reduce the complexity of resource allocation, since the resource allocation is based on a predefined resource profile, which can be designed and configured according to specific scenarios in non-real-time (i.e., the designing, testing, and implementing of the resource allocation mechanism are simpler as compared to real-time resource allocation based on real-time measurement in the related art). Further, example embodiments provide predictable resource allocation and improved performance stability, since the resource allocation is based on the resource profile, which provides clear, predefined mappings of how resources will be allocated across various runtime applications, thereby ensuring consistent and predictable application performance as well as reducing the risk of sudden/unexpected changes in resource allocation. In addition, since example embodiments allocate resources based on the resource profile, the resource allocation requires significantly lesser real-time operations (e.g., real-time measurements, real-time decision-making, etc.), thereby reducing the computational demand for resource allocation and allowing more resources (e.g., resources which previously required for real-time measurement and real-time decision making) to be allocated to the applications/functions.

It is contemplated that features, advantages, and significances of example embodiments described herein are merely a portion of the present disclosure, and are not intended to be exhaustive or to limit the scope of the present disclosure. Further descriptions of the features, components, configuration, operations, and implementations of the example embodiments of the present disclosure are provided in the following.

### Example System Configuration

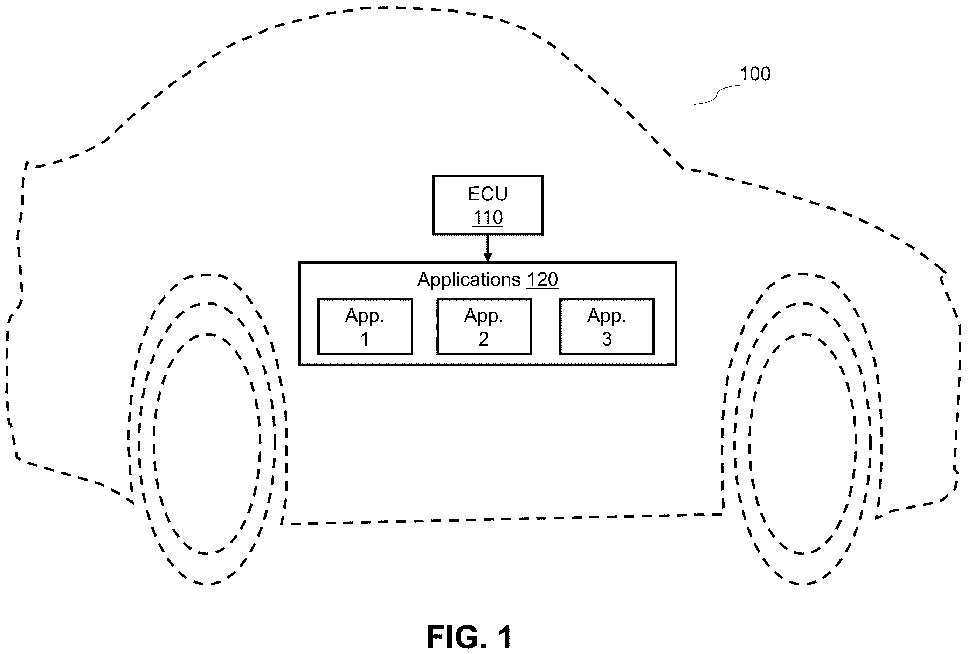

FIG. 1 illustrates a block diagram of an example system configuration, according to one or more example embodiments. As illustrated in FIG. 1, a vehicle system 100 may include an electronic controller unit (ECU) 110 and a plurality of applications 120. It is contemplated that the number of the ECU and applications illustrated in FIG. 1 is merely an example simplified for illustrative and descriptive purposes, and any suitable number of such components may be implemented. For instance, the vehicle system 100 may include more than one ECU, the applications 120 may include more/less than 3 applications, and the like. Similarly, the vehicle system 100 may include any other suitable components, without departing from the scope of the present disclosure.

The ECU 110 may include an embedded system that may be implemented in the vehicle system 100 to execute, control, and process operational tasks (e.g., real-time tasks, near-real-time tasks, etc.), thereby ensuring the seamless interaction between various components or subsystems of the vehicle. According to example embodiments, the ECU 110 may include a processor (e.g., a microprocessor, etc.), a memory, a storage, input/output interfaces, and a communication interface (e.g., controller area network (CAN) interface, etc.). In this regard, it is contemplated that one or more operations associated with the ECU 110 may be performed by the associated processor upon executing computer-readable instructions (e.g., computer-readable instructions stored in the memory/storage of the ECU 110, computer-readable instructions stored in a memory/storage external to the ECU 110, etc.). Thus, the ECU 110 may also be referred to as a "processor" or a "processing unit" herein.

The ECU 110 may be dedicated to one or more specific vehicle operations, such as engine management, transmission control, braking control, infotainment management, and the like. For instance, the ECU 110 may include an advanced driver assistance system (ADAS) ECU that manages or controls driver assistance features or applications, a shadow-mode control ECU that manages or controls shadow-mode features or applications, a data collection ECU that manages or controls data collecting features or applications, a cockpit/infotainment ECU that manages or controls cockpit and infotainment features or applications, and the like.

The applications 120 may include a wide range of applications implementable in the vehicle system 100 to enhance vehicle performance, safety and security, user experience, and the like. Further, the applications 120 may be controlled, managed, or implemented by the ECU 110. According to example embodiments, the applications 120 may include one or more real-time applications that have strict timing requirements and are required to be executed within a specific time window. Additionally or alternatively, the applications 120 may include one or more non-real-time applications that do not have strict timing requirements. As a non-limiting example, the applications 120 may include an ADAS application, a shadow mode application, a data collection application, a cockpit application, an electronic stability control (ESC) application, a tire pressure monitoring application, a heating, ventilation, and air conditioning (HVAC) application, a powertrain control application, an in-vehicle infotainment (IVI) application, an entertainment application, a video/audio recording application, a vehicle security application, an intrusion detection application, and the like. It is contemplated that the applications 120 may include any other suitable type of application, without departing from the scope of the present disclosure.

The applications 120 may be implemented in various forms based on the deployment and execution requirements. For instance, the applications 120 may be implemented in the form of containerized applications, virtualized applications, bare-metal applications, real-time operating system (RTOS)-based applications, middleware-based applications, and the like.

According to example embodiments, a single ECU 110 may be configured to manage or implement multiple applications 120. For instance, the ECU 110 may implement each of the applications 120 in an associated application environment (e.g., virtual environment, etc.) that may be isolated or independent from other applications. Alternatively or additionally, one or more of the applications 120 may be implemented in a virtual machine (VM), and the VM may be controlled or managed by a hypervisor. Alternatively or additionally, one or more of the applications 120 may be implemented in an operating system (OS). Alternatively or additionally, one or more of the applications 120 may be controlled or managed by a resource manager (or an associated middleware). Furthermore, the applications 120 may utilize one or more artificial intelligence (AI)/machine learning (ML) models or the associated technologies to further enhance the performance and enrich the associated features.

Each of the applications 120 may require similar or different hardware resources (e.g., a central processing unit (CPU), a graphic processing unit (GPU), a neural processing unit (NPU), a memory, a storage, a network bandwidth, etc.) to operate. In this regard, when an application is running or operating in the vehicle system 100, said running/operating application may be referred to as a "runtime application" herein.

According to example embodiments, the ECU 110 may be configured to allocate one or more hardware resources to one or more of the applications 120 during runtime. Generally, the ECU 110 may receive information associated with or indicative of the application(s) currently running in the vehicle system 100 (may be referred to as "information of runtime applications" herein), receive a resource profile, and then allocate the hardware resource(s) to the currently running applications. In this way, the ECU 110 may dynamically allocate hardware resource(s) to the applications 120, based on the runtime status of the applications (e.g., how many applications are actively running, what kind of applications are currently running, etc.).

According to example embodiments, the ECU 110 may receive, from the applications 120 (or a component that hosts, manages, or implements the applications 120), the information of the runtime applications. The running applications may be part of or all of the plurality of applications 120. In addition to or in alternative to obtaining the information of runtime applications from the applications 120 (or a component that hosts or implements the applications 120 such as a VM, an OS, etc.), the ECU 110 may manage or implement a real-time operating system (RTOS) that monitors the active applications. In that case, the ECU 110 may obtain, from the RTOS, the information associated with applications currently running in the vehicle system 100. Alternatively or additionally, the ECU 110 may obtain, from a standardized software environment (e.g., AUTOSAR software environment) that manages the status of the applications 120, the information associated with applications currently running in the vehicle system 100. Alternatively or additionally, the ECU 110 may determine the information of the runtime applications based on one or more inputs/signals from one or more sensors (e.g., a signal indicative of a user pressing a button to activate the navigation system indicates the activation of a navigation application, etc.). It is contemplated that the ECU 110 may also obtain the information of the runtime applications via any other suitable methods, without departing from the scope of the present disclosure.

On the other hand, the resource profile may be predefined by a user (e.g., predefined by a vehicle manufacturer based on best practices or historical data for a specific vehicle mode, based on the preference of a specific driver, etc.) and may be stored in a storage medium (e.g., storage component, memory, etc.) accessible by the ECU 110. In this regard, the ECU 110 may access the storage medium that stores the resource profile and may manage (e.g., utilize, update, etc.) the resource profile when required.

According to example embodiments, the resource profile may include predefined mappings of a plurality of applications, a minimum resource required by each of the plurality of applications, and a priority level of each of the plurality of applications.

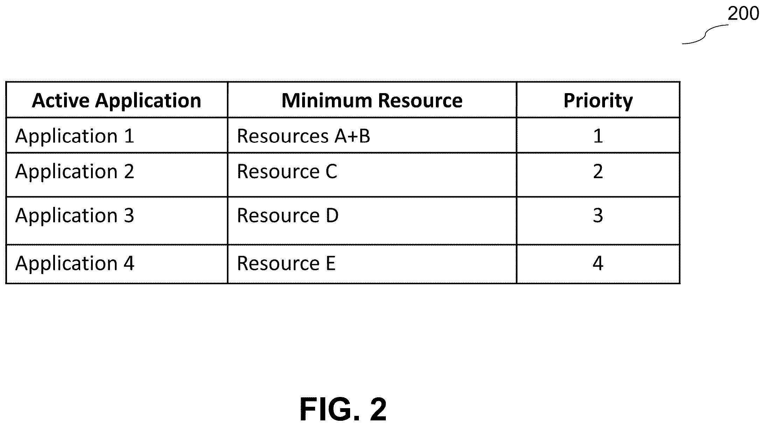

For instance, FIG. 2 illustrates an example resource profile 200, according to one or more example embodiments. It is contemplated that the resource profile in FIG. 2 is simplified for descriptive purposes, and the contents and configurations of the resource profile may be different in actual implementations.

As illustrated in FIG. 2, the resource profile 200 may include predefined mappings of a plurality of applications (e.g., Applications 1-4), a minimum resource(s) required by each of the plurality of applications (e.g., resources A+B are the minimum resources required by the Application 1, etc.), and a priority level of each of the plurality of applications (e.g., Application 1 has the highest priority, followed by Applications 2, 3, and 4).

According to example embodiments, the hardware resources that may be allocated by the ECU 110 and included in the mappings of the resource profile may include at least one of: a CPU, a GPU, an NPU, a memory (e.g., random-access memory (RAM), etc.), a storage, a network bandwidth, and the like.

In the example resource profile 200 of FIG. 2, the minimum resource(s) of each application is presented as a generic unit (e.g., resources A+B, resource C, etc.), while in the actual implementations, the information of the minimum resource(s) can be more specific to the type of hardware resources associated therewith. For instance, the minimum resource information in the resource profile may include at least one of: a predefined number of cores of the CPU (e.g., number of CPU cores allocated to the corresponding operation mode, etc.), a predefined clock speed of the CPU (e.g., frequency (e.g., GHz, MHz) of the CPU allocated to the corresponding operation mode, etc.), a predefined number of cores of the GPU (e.g., number of GPU cores allocated to the corresponding operation mode, etc.), a predefined clock speed of the GPU (e.g., frequency (e.g., GHz, MHz) of the GPU allocated to the corresponding operation mode, etc.), a predefined memory bandwidth of the GPU (e.g., amount of graphic memory (e.g., GB, MB) of the GPU allocated to the corresponding operation mode, etc.), a predefined number of cores of the NPU (e.g., number of NPU cores allocated to the corresponding operation mode, etc.), a predefined clock speed of the NPU (e.g., frequency (e.g., GHz, MHz) of the NPU allocated to the corresponding operation mode, etc.), a predefined amount of the memory (e.g., amount of RAM (e.g., GB, MB) allocated to the corresponding operation mode, etc.), a predefined privilege for utilizing the memory (e.g., permission for direct memory access to the RAM under the corresponding operation mode, permission for utilizing cache memory under the corresponding operation mode, high priority in accessing the memory under the corresponding operation mode, etc.), a predefined amount of storage (e.g., amount of storage (e.g., GB, MB) allocated to the corresponding operation mode for temporary/periodic storage, etc.), a predefined privilege for utilizing the storage (e.g., permission to Read/Write the storage under the corresponding operation mode, higher priority in accessing the storage under the corresponding operation mode, etc.), a predefined amount of network bandwidth (e.g., amount of bandwidth (e.g., Gbps, Mbps) allocated to the corresponding operation mode), and the like.

Further, the priority level information in the resource profile may be determined or decided by the user (e.g., vehicle manufacturer, etc.) based on one or more of: the safety criticality of the applications (e.g., applications essential for or associated with the safety of the vehicle (e.g., Anti-lock Braking System (ABS) application, Advanced Driver Assistance System (ADAS) application, etc.) may be allocated the highest priority among all applications, etc.), the Quality of Service (QoS) requirement of the applications (e.g., applications that require guaranteed performance metrics (e.g., real-time navigation applications that require low latency, etc.) may be allocated a priority level lower than safety-critical applications but higher than other types of applications, etc.), the security requirement of the applications (e.g., applications essentials for ensuring the security of the vehicle (e.g., intrusion detection applications, security camera applications, etc.) may be allocated a priority level lower than the safety-critical applications but higher than other types of applications, etc.), the user preferences (e.g., applications frequently utilized by the driver/vehicle's users (e.g., infotainment applications, etc.) may be allocated a priority level higher than less-frequently utilized applications, etc.), and the like.

According to example embodiments, the ECU 110 may determine, based on the resource profile and the information of the runtime applications, whether all currently running applications have been allocated with the associated minimum resource(s). Accordingly, based on determining that any of the currently running applications have not been allocated with the minimum resource, the ECU 110 may allocate the hardware resource(s) to the currently running applications that have not been allocated with the minimum resource, thereby ensuring that all currently running applications have been allocated at least the minimum resource(s) required for the associated operation(s). Conversely, based on determining that all currently running applications have been allocated with the minimum resource, the ECU 110 may allocate the hardware resource(s) to the currently running applications according to the priority level of each of the currently running applications, thereby optimizing the hardware resource allocation and the performance of the high-priority application(s).

In some example embodiments, based on determining that any of the currently running applications have not been allocated with the minimum resource, the ECU 110 may determine how many (e.g., multiple, only one, etc.) of the currently running applications have not been allocated with the minimum resource. Based on determining that multiple of the currently running applications have not been allocated with the minimum resource, the ECU 110 may allocate the hardware resource to the multiple currently running applications according to the priority level of each of the multiple currently running applications. For instance, the ECU 110 may prioritize the allocation of the hardware resource(s) to the application(s) that has the highest priority level, thereby ensuring that the high-priority application(s) has the minimum resource allocated. On the other hand, based on determining that only one of the currently running applications has not been allocated with the minimum resource, the ECU may allocate the hardware resource to said only one of the currently running applications.

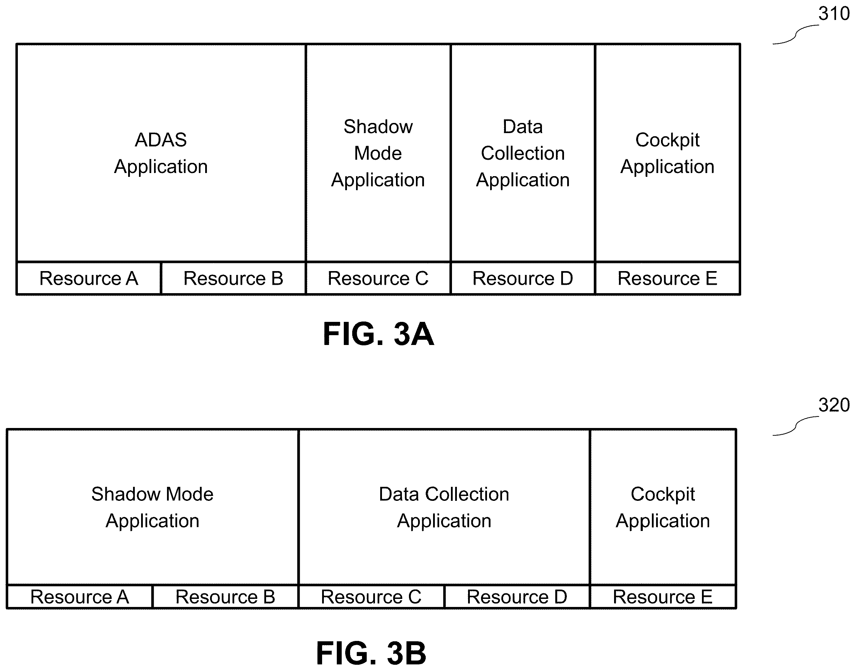

FIG. 3A and FIG. 3B each illustrates an example use case of runtime application resource allocation, according to one or more example embodiments. In both example use cases, it can assumed that there are five units of hardware resource (i.e., resources A-E) available for allocation to the runtime applications. Further, in both example use cases, it can be assumed that four applications are involved, namely, an ADAS application, a shadow mode application, a data collection application, and a cockpit application. In this regard, it can be assumed that the resource profile defines or indicates that the ADAS application has the highest priority level, both the shadow mode application and the data collection application have the second highest priority level, and the cockpit application has the lowest priority level among the four example applications. Furthermore, it can be assumed that the resource profile defines or indicates that each of the applications has a minimum resource requirement of one unit of hardware resource (e.g., at least one of the resources A-E).

Referring to FIG. 3A, in the example use case 310, all of the four applications (i.e., ADAS application, shadow mode application, data collection application, and cockpit application) are running in the vehicle. In this regard, since there are five units of hardware resources available, the ECU 110 may allocate at least one unit of hardware resource to each of the four applications, thereby satisfying the minimum resource requirement of the applications. In addition, since there is an additional unit of hardware resource available for allocation, the ECU 110 may allocate the additional unit of hardware resource to the ADAS application that has the highest priority level among the four runtime applications.

Referring next to FIG. 3B, in the example use case 320, the ADAS application is deactivated/terminated, and there are three applications (i.e., shadow mode application, data collocation application, and cockpit application) running in the vehicle. In this regard, since there are five units of hardware resources available for allocation, the ECU 110 may allocate at least one unit of hardware resource to each of the three applications, thereby satisfying the minimum resource requirement of the applications. In addition, since there is two additional units of hardware resource available for allocation, the ECU 110 may allocate each of the two additional units of hardware resource to each of the shadow mode application and data collection application, since these applications have the same priority level and have a priority level higher than the cockpit application.

Upon determining the resource(s) to be allocated, the ECU 110 may be configured to output information for allocating the resource(s). For instance, the ECU 110 may modify a resource configuration of the associated hardware resource(s), thereby allocating the hardware resource(s) to the associated runtime application(s). Additionally or alternatively, the ECU 110 may generate an instruction for allocating the resource(s) to a runtime application(s), and then output the instruction to one or more of: a VCU that manages the hardware resource(s), an OS that implements at least one application (e.g., the runtime application(s), etc.), a hypervisor that manages a VM that implements the at least one application, a resource manager that manages the hardware resource, and the like.

According to example embodiments, the ECU 110 may be configured to periodically update the resource profile. For instance, the ECU 110 may receive, from a user equipment (e.g., a device/system of the vehicle manufacturer, etc.) via over-the-air (OTA), an instruction to update the resource profile. Accordingly, the ECU 110 may update the resource profile based on the received instruction. In some example embodiments, the update is a delta/incremental update. Namely, instead of downloading and replacing the entire resource profile, the ECU 110 may determine a difference (e.g., "delta") between the existing resource profile and the updated resource profile, and may download and install/update only the portion that is different from the existing resource profile. According to example embodiments, the ECU 110 may periodically (or continuously) provide, to the user equipment (e.g., the device/system of the vehicle manufacturer) via OTA, information associated with or indicative of the driver's driving habits or preferences. Accordingly, the user (e.g., the vehicle manufacturer) may customize a resource profile based on the driver's driving habits or preferences (e.g., a driver who frequently uses navigation applications may be provided a resource profile that prioritizes the frequently used navigation applications, etc.), and then provide the customized resource profile to the ECU 110. Subsequently, the ECU 110 may update the existing resource profile to be consistent with the customized resource profile. In some example embodiments, the ECU 110 may utilize an AI/ML model to determine or update a resource profile based on inputs such as the driver's driving habits, etc.

In view of the above, example embodiments of the present disclosure may provide a system, a device, and the like, that may allocate one or more hardware resources to one or more applications currently running in the vehicle, based on the information of the applications (e.g., minimum resource requirement, priority level, etc.) defined or specified in the resource profile. Ultimately, example embodiments of the present disclosure may dynamically allocate the available hardware resources according to the runtime status of the vehicle (e.g., how many applications are currently running, what kind of applications are currently running, etc.), thereby optimizing the resource allocation as well as the performance of the applications.

### Example Operations

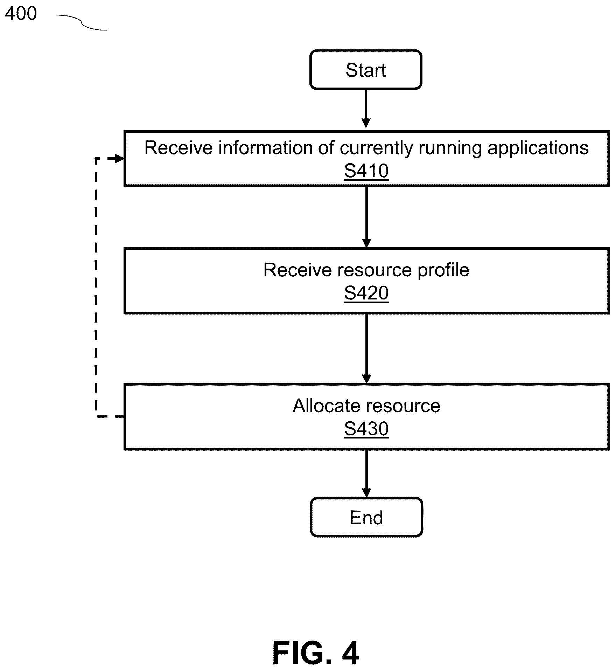

As described above, various operations may be performed by the ECU 110 (or a processor associated with the ECU 110) to allocate one or more hardware resources to one or more runtime applications in the vehicle. Several example operations, according to one or more example embodiments, are described in the following with reference to FIG. 4. One or more operations (or the data involved therein) may be similar to those described above with reference to FIGs. 1-3B, thus it may be understood that the described operation(s)/data may be similarly applied to the operations in FIG. 4 (unless described otherwise) and redundant descriptions associated therewith may be omitted for conciseness.

For descriptive purposes, the operations are mainly described as being performed by the ECU 110 or a processor associated with the ECU 110. Specifically, according to example embodiments, the ECU 110 may include (or may be implemented in) one or more hardware components or devices, and one or more operations described hereinbelow may be performed by said one or more hardware components. For instance, the ECU 110 may include (or may implement) a processor and a memory/storage, wherein the memory/storage may include computer-executable instructions which, when being executed by the processor, cause the processor to perform one or more operations described herein.

FIG. 4 illustrates a block diagram of an example method 400 for allocating one or more hardware resources to one or more runtime applications in a vehicle, according to one or more example embodiments.

At operation S410, the ECU 110 (or the associated processor) may be configured to receive information associated with applications currently running in the vehicle. The applications may be a portion of a plurality of applications implemented in the vehicle. According to example embodiments, the ECU 110 (or the associated processor) may obtain the information of the runtime application(s) from the runtime application(s) (e.g., via API calls, etc.), from an RTOS that monitors the applications, from a standardized software environment (e.g., AUTOSAR software environment) that monitors the applications, and the like. Alternatively or additionally, the ECU 110 (or the associated processor) may receive one or more signals/messages from one or more sensors, and then determine the information of the runtime applications based thereon.

At operation S420, the ECU 110 (or the associated processor) may be configured to receive a resource profile. As described above with reference to FIG. 2, the resource profile may include predefined mappings of the plurality of applications, a minimum resource required by each of the plurality of applications, and a priority level of each of the plurality of applications.

According to example embodiments, the hardware resource that may be allocated by the ECU 110 and included in the mappings of the resource profile may include at least one of: a CPU, a GPU, an NPU, a memory, a storage, a network bandwidth, and the like. According to example embodiments, the information of the minimum resource(s) in the resource profile may include at least one of: a predefined number of cores of the CPU, a predefined clock speed of the CPU, a predefined number of cores of the GPU, a predefined clock speed of the GPU, a predefined memory bandwidth of the GPU, a predefined number of cores of the NPU, a predefined clock speed of the NPU, a predefined amount of the memory, a predefined privilege for utilizing the memory, a predefined amount of storage, a predefined privilege for utilizing the storage, a predefined amount of network bandwidth, and the like.

It is contemplated that the operations S410 and S420 may be performed in any suitable sequential manner, without departing from the scope of the present disclosure. For instance, operation S410 may be performed before operation S420, concurrently with operation S420, and/or after operation S420.

Referring still to FIG. 4, at operation S430, the ECU 110 (or the associated processor) may be configured to allocate the hardware resource to the currently running applications based on the resource profile. For instance, the ECU 110 (or the associated processor) may modify a resource configuration of the associated hardware resource(s), thereby allocating or reserving the hardware resource(s) to the associated runtime application(s). Additionally or alternatively, the ECU 110 may generate an instruction for allocating the resource(s) to a runtime application(s), and then output the instruction to one or more of: a VCU that manages the hardware resource(s), an OS that implements at least one application (e.g., the runtime application(s), etc.), a hypervisor that manages a VM that implements the at least one application, a resource manager that manages the hardware resource, and the like.

Upon performing operation S430, the method 400 may be terminated. Alternatively, the method 400 may return to operation S410, such that the ECU 110 (or the associated processor) may repeat operations S410-S430 for at least a predetermined period of time.

It is contemplated that the operations illustrated in FIG. 4 are merely examples and the scope of the present disclosure should not be limited thereto. Specifically, the method 400 may include more/less operations than as illustrated, and/or may perform the operations in any suitable sequential manner, without departing from the scope of the present disclosure. For instance, in some example embodiments, concurrently with the operations of method 400, the ECU 110 (or the associated processor) may also be configured to manage the resource profile (e.g., receive an instruction to update the resource profile from a user equipment via OTA, update at least a portion of the resource profile based on the received instruction, etc.).

### Example Components

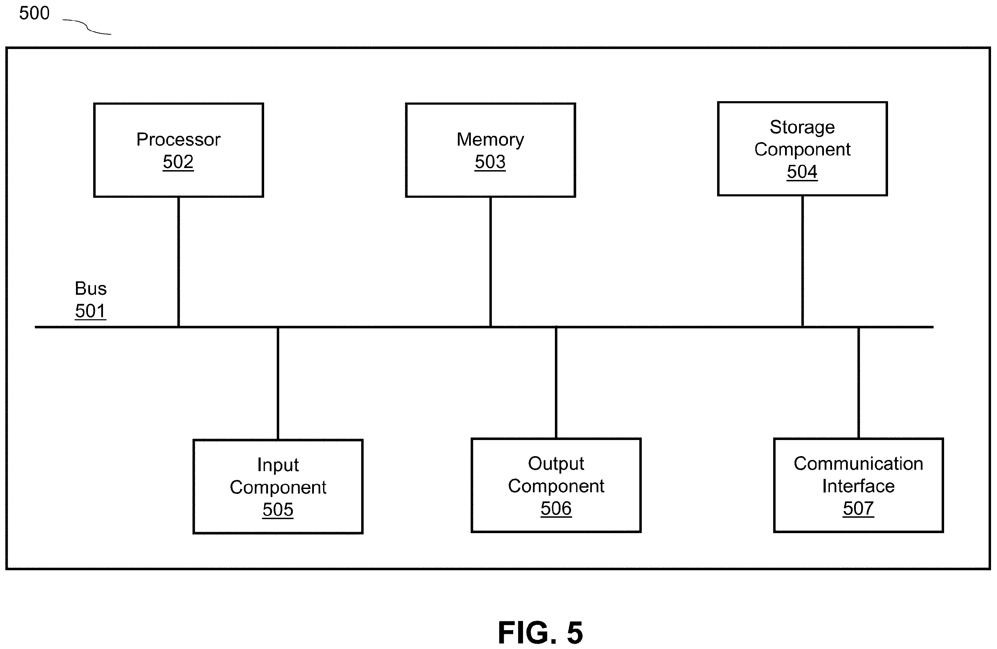

FIG. 5 illustrates a diagram of example components of a device 500, according to one or more example embodiments. In some example embodiments, the device 500 may be an in-vehicle device that implements the ECU 110 (or one or more operations associated therewith). The device 500 may include any device or equipment that can be installed or implemented in a vehicle to interoperate with other components, such as the sensors, of the vehicle. For instance, the device 500 may include an SoC, an embedded system, a vehicle accessory, an aftermarket device (e.g., a device that can be installed or added to the vehicle after the vehicle is sold, etc.), and the like.

As illustrated in FIG. 5, the device 500 may include at least one bus 501, at least one processor 502, at least one memory 503, at least one storage component 504, at least one input component 505, at least one output component 506, and at least one communication interface 507.

It is contemplated that the device 500 may include more or fewer components than illustrated in FIG. 5, without departing from the scope of the present disclosure. For instance, in some example embodiments, the device 500 may include a plurality of storage components 504, the input component 505 and the output component 506 may be implemented as a transceiver component, the memory 503 and storage component 504 may be implemented as a memory storage, and the like.

The bus 501 may be configured to facilitate or enable communications among the components of the device 500. Specifically, the bus 501 may communicatively couple the components to each other and provide a means for data transfer and flow of control signals between the components. The bus 501 may include one or more of: an internal bus, an address bus, a data bus, a control bus, a controller area network (CAN) bus, an Ethernet bus, a peripheral component interconnect express (PCIe) bus, and any other suitable type of bus that can be implemented in the device 500 to enable communication and coordination between the components within the device 500 in real-time (or near real-time).

The processor 502 may be implemented in hardware, firmware, or a combination of hardware and software, and may be configured to handle real-time (or near real-time) data processing and control of the device 500. The processor 502 may include one or more of: a central processing unit (CPU), a graphics processing unit (GPU), a neural processing unit (NPU), a tensor processing unit (TPU), an accelerated processing unit (APU), a microprocessor, a microcontroller, a digital signal processor (DSP), a field-programmable gate array (FPGA), an application-specific integrated circuit (ASIC), and/or another type of processing or computing component that can be implemented in the device 500. In some example implementations, the processor 502 may be capable of being programmed to perform one or more operations described herein. Further, the processor 502 may include a plurality of processing units, each of which may be dedicated to performing a specific operation.

The memory 503 may include one or more mediums for storing temporary data, runtime variables, program instructions, and buffers required for the operations of the device 500. The memory 503 may include one or more of: a flash memory, a read-only memory (ROM), a random-access memory (RAM), a dynamic or static storage device (e.g., a flash memory, a magnetic memory, and/or an optical memory), any other suitable type of memory that can be implemented in the device 500 to store information and/or instructions for use by the processor 502.

The storage component 504 may be configured to store non-volatile data, such as firmware, configuration settings, calibration data, information, and/or software related to the operation and use of the device 500. For example, the storage component 504 may include a hard disk (e.g., a magnetic disk, an optical disk, a magneto-optic disk, and/or a solid state disk), a compact disc (CD), a digital versatile disc (DVD), a floppy disk, a cartridge, a magnetic tape, and/or another type of non-transitory computer-readable medium, along with a corresponding drive.

According to example embodiments, the memory 503 and/or the storage component 504 may be configured to store computer-readable or computer-executable instructions for implementing one or more operations of the device 500. The memory 503 and/or the storage component 504 may provide the stored information for the execution of the processor 502. Furthermore, the memory 503 and/or the storage component 504 may include data or information that may be utilized by the processor 502 to allocate the resources, such as the resource profile described herein. Further, the memory 503 and/or the storage component 504 may be configured to store one or more data involved in the operations of the device 500, such as the resource profile, the sensor data, the information associated with the runtime operations of the vehicle, the information for allocating the resource, and the like.

The input component 505 may include one or more input components that permit the device 500 to receive information, such as via user input (e.g., a touch screen display, a keyboard, a keypad, a mouse, a button, a switch, and/or a microphone). The output component 506 may include one or more output components that provide output information from the device 500 (e.g., a display, a speaker, a navigation device, one or more light-emitting diodes (LEDs), etc.) According to example embodiments, the input component 505 and/or the output component 506 may be optional and may be excluded from the device 500.

The at least one communication interface 507 may include a transceiver-like component (e.g., a transceiver and/or a separate receiver and transmitter) that enables the device 500 to communicate with other devices or components (e.g., ECUs, user devices, etc.), such as via a wired connection, a wireless connection, or a combination of wired and wireless connections. For example, communication interface 507 may include a controller area network (CAN) bus interface, an Ethernet interface, an optical interface, a coaxial interface, an infrared interface, a radio frequency (RF) interface, a universal serial bus (USB) interface, a Wi-Fi interface, a cellular network interface, or the like.

According to one or more embodiments, the communication interface 507 may include at least one input/output (I/O) interface, at least one network interface, at least one storage interface, or the like, that enable the components 502-506 to communicate with other components. Further, the communication interface 507 may include one or more application programming interfaces (APIs) that allow the device 500 (or one or more components included therein) to communicate with one or more software applications (e.g., software application managed by the ECUs, etc.).

Computer-executable instructions (e.g., software instructions, etc.) may be read into memory 503 and/or storage component 504 from another computer-readable medium or from another device (e.g., a remote server, an external storage, etc.) via, for example, the communication interface 507. When executed, the computer-executable instructions stored in memory 503 and/or storage component 504 may cause the processor 502 to perform one or more processes described herein. Additionally, or alternatively, hardwired circuitry may be used in place of or in combination with software instructions to perform one or more processes described herein. Thus, implementations described herein are not limited to any specific combination of hardware circuitry and software.

### Various Aspects of Embodiments

It is contemplated that features, advantages, and significances of example embodiments described hereinabove with reference to FIG. 1 to FIG. 5 are merely a portion of the present disclosure, and are not intended to be exhaustive or to limit the scope of the present disclosure. Further descriptions of the features, components, configuration, operations, and implementations of example embodiments of the present disclosure, as well as the associated technical advantages and significances, are provided in the following.

It is understood that the specific order or hierarchy of blocks in the processes/ flowcharts disclosed herein is an illustration of example approaches. Based upon design preferences, it is understood that the specific order or hierarchy of blocks in the processes/ flowcharts may be rearranged. Further, some blocks may be combined or omitted. The accompanying method claims present elements of the various blocks in a sample order, and are not meant to be limited to the specific order or hierarchy presented.

Some embodiments may relate to a system, a method, and/or a computer-readable medium at any possible technical detail level of integration. Further, as described hereinabove, one or more of the above components described above may be implemented as instructions stored on a computer readable medium and executable by at least one processor (and/or may include at least one processor ). The computer-readable medium may include a computer-readable non-transitory storage medium (or media) having computer-readable program instructions thereon for causing a processor (or processors) to carry out operations.

The computer readable storage medium can be a tangible device that can retain and store instructions for use by an instruction execution device. The computer-readable storage medium may be, for example, but is not limited to, an electronic storage device, a magnetic storage device, an optical storage device, an electromagnetic storage device, a semiconductor storage device, or any suitable combination of the foregoing. A non-exhaustive list of more specific examples of the computer-readable storage medium includes the following: a portable computer diskette, a hard disk, a random access memory (RAM), a read-only memory (ROM), an erasable programmable read-only memory (EPROM or Flash memory), a static random access memory (SRAM), a portable compact disc read-only memory (CD-ROM), a digital versatile disk (DVD), a memory stick, a floppy disk, a mechanically encoded device such as punch-cards or raised structures in a groove having instructions recorded thereon, and any suitable combination of the foregoing. A computer-readable storage medium, as used herein, is not to be construed as being transitory signals per se, such as radio waves or other freely propagating electromagnetic waves, electromagnetic waves propagating through a waveguide or other transmission media (e.g., light pulses passing through a fiber-optic cable), or electrical signals transmitted through a wire.

Computer readable program instructions described herein can be downloaded to respective computing/processing devices from a computer-readable storage medium or to an external computer or external storage device via a network, for example, the Internet, a local area network, a wide area network and/or a wireless network. The network may comprise copper transmission cables, optical transmission fibers, wireless transmission, routers, firewalls, switches, gateway computers and/or edge servers. A network adapter card or network interface in each computing/processing device receives computer readable program instructions from the network and forwards the computer readable program instructions for storage in a computer readable storage medium within the respective computing/processing device.

Computer readable program code/instructions for carrying out operations may be assembler instructions, instruction-set-architecture (ISA) instructions, machine instructions, machine dependent instructions, microcode, firmware instructions, state-setting data, configuration data for integrated circuitry, or either source code or object code written in any combination of one or more programming languages, including an object-oriented programming languages such as Smalltalk, C++, or the like, and procedural programming languages, such as the "C" programming language or similar programming languages. The computer readable program instructions may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider). In some embodiments, electronic circuitry including, for example, programmable logic circuitry, field-programmable gate arrays (FPGA), or programmable logic arrays (PLA) may execute the computer readable program instructions by utilizing state information of the computer readable program instructions to personalize the electronic circuitry, in order to perform aspects or operations.

These computer readable program instructions may be provided to a processor of an SoC, an ECU, a general-purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks. These computer readable program instructions may also be stored in a computer-readable storage medium that can direct a computer, a programmable data processing apparatus, and/or other devices to function in a particular manner, such that the computer-readable storage medium having instructions stored therein comprises an article of manufacture including instructions which implement aspects of the function/act specified in the flowchart and/or block diagram block or blocks.

The computer readable program instructions may also be loaded onto a computer, other programmable data processing apparatus, or another device to cause a series of operational steps to be performed on the computer, other programmable apparatus or other device to produce a computer-implemented process, such that the instructions which execute on the computer, other programmable apparatus, or other device implement the functions/acts specified in the flowchart and/or block diagram block or blocks.

The flowchart and block diagrams in the Figures illustrate the architecture, functionality, and operation of possible implementations of systems, methods, and computer-readable media according to various embodiments. In this regard, each block in the flowchart or block diagrams may represent a module, segment, or portion of instructions, which comprises one or more executable instructions for implementing the specified logical function(s). The method, computer system, and computer-readable medium may include additional blocks, fewer blocks, different blocks, or differently arranged blocks than those depicted in the Figures. In some alternative implementations, the functions noted in the blocks may occur out of the order noted in the Figures. For example, two blocks shown in succession may, in fact, be executed concurrently or substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions.

It will be apparent that systems and/or methods, described herein, may be implemented in different forms of hardware, firmware, or a combination of hardware and software. The actual specialized control hardware or software code used to implement these systems and/or methods is not limiting of the implementations. Thus, the operation and behavior of the systems and/or methods were described herein without reference to specific software code-it being understood that software and hardware may be designed to implement the systems and/or methods based on the description herein.

## Claims

1. A method for allocating a hardware resource in a vehicle, the method comprising:
receiving, by an electronic control unit (ECU) (110), information associated with applications currently running in the vehicle, the applications being a portion of a plurality of applications;
receiving, by the ECU (110), a resource profile (200), wherein the resource profile (200) comprises predefined mappings of the plurality of applications, a minimum resource required by each of the plurality of applications, and a priority level of each of the plurality of applications; and
allocating, by the ECU (110), the hardware resource to the currently running applications based on the resource profile (200).

2. The method according to claim 1, wherein the allocating the hardware resource comprises:
determining, by the ECU (110) and based on the resource profile (200), whether all currently running applications have been allocated with the minimum resource; and
based on determining that any of the currently running applications have not been allocated with the minimum resource, allocating the hardware resource to the currently running applications that have not been allocated with the minimum resource.

3. The method according to claim 2, wherein the allocating the hardware resource to the currently running applications that have not been allocated with the minimum resource comprises:
determining, by the ECU (110), whether multiple of or only one of the currently running applications has not been allocated with the minimum resource;
based on determining that multiple of the currently running applications have not been allocated with the minimum resource, allocating the hardware resource to the multiple currently running applications according to the priority level of each of the multiple currently running applications; and
based on determining that only one of the currently running applications has not been allocated with the minimum resource, allocating the hardware resource to the only one of the currently running applications.

4. The method according to claim 2 or 3, wherein the allocating the hardware resource further comprises:
based on determining that all currently running applications have been allocated with the minimum resource, allocating the hardware resource to the currently running applications according to the priority level of each of the currently running applications.

5. The method according to any one of claims 1 to 4, wherein the allocating the hardware resource comprises:
modifying, by the ECU (110), a resource configuration of the hardware resource to thereby allocate the hardware resource to the currently running applications.

6. The method according to any one of claims 1 to 5, wherein the allocating the hardware resource comprises:
generating, by the ECU (110), an instruction for allocating the hardware resource to the currently running applications; and
outputting, by the ECU (110), the instruction to at least one of: a vehicle control unit (VCU) that manages the hardware resource, an operating system (OS) that implements at least one application, a hypervisor that manages a virtual machine (VM) that implements the at least one application, and a resource manager that manages the hardware resource.

7. The method according to any one of claims 1 to 6, wherein the hardware resource comprises at least one of: a central processing unit (CPU), a graphic processing unit (GPU), a neural processing unit (NPU), a memory, a storage, and a network bandwidth.

8. The method according to claim 7, wherein the minimum resource comprises at least one of: a predefined number of cores of the CPU, a predefined clock speed of the CPU, a predefined number of cores of the GPU, a predefined clock speed of the GPU, a predefined memory bandwidth of the GPU, a predefined number of cores of the NPU, a predefined clock speed of the NPU, a predefined amount of the memory, a predefined privilege for utilizing the memory, a predefined amount of the storage, a predefined privilege for utilizing the storage, and a predefined amount of network bandwidth.

9. The method according to any one of claims 1 to 8, wherein the method further comprises:
receiving, by the ECU (110), from a user equipment via over-the-air (OTA), an instruction to update the resource profile (200); and
updating, by the ECU (110), at least a portion of the resource profile (200) based on the received instruction.

10. A device for allocating a hardware resource in a vehicle, the device comprising:
a memory storage (503, 504) storing computer-executable instructions; and
a processor (502) communicatively coupled to the memory storage (503, 504), wherein the processor (502) is configured to execute the instructions to:
receive information associated with applications currently running in the vehicle, the applications being a portion of a plurality of applications;
receive a resource profile (200), wherein the resource profile (200) comprises predefined mappings of the plurality of applications, a minimum resource required by each of the plurality of applications, and a priority level of each of the plurality of applications; and
allocate the hardware resource to the currently running applications based on the resource profile (200).

11. The device according to claim 10, wherein the processor (502) is configured to execute the instructions to allocate the hardware resource by:
determining, based on the resource profile (200), whether all currently running applications have been allocated with the minimum resource; and
based on determining that any of the currently running applications have not been allocated with the minimum resource, allocating the hardware resource to the currently running applications that have not been allocated with the minimum resource.

12. The device according to claim 11, wherein the processor (502) is configured to execute the instructions to allocate the hardware resource to the currently running applications that have not been allocated with the minimum resource by:
determining whether multiple of or only one of the currently running applications has not been allocated with the minimum resource;
based on determining that multiple of the currently running applications have not been allocated with the minimum resource, allocating the hardware resource to the multiple currently running applications according to the priority level of each of the multiple currently running applications; and
based on determining that only one of the currently running applications has not been allocated with the minimum resource, allocating the hardware resource to the only one of the currently running applications.

13. The device according to claim 11 or 12, wherein the processor (502) is further configured to execute the instructions to allocate the hardware resource by:
based on determining that all currently running applications have been allocated with the minimum resource, allocating the hardware resource to the currently running applications according to the priority level of each of the currently running applications.

14. The device according to any one of claims 10 to 13, wherein the processor (502) is configured to execute the instructions to allocate the hardware resource by:
modifying a resource configuration of the hardware resource to thereby allocate the hardware resource to the currently running applications.

15. The device according to any one of claims 10 to 14, wherein the processor (502) is configured to execute the instructions to allocate the hardware resource by:
generating an instruction for allocating the hardware resource to the currently running applications; and
outputting the instruction to at least one of: a vehicle control unit (VCU) that manages the hardware resource, an operating system (OS) that implements at least one application, a hypervisor that manages a virtual machine (VM) that implements the at least one application, and a resource manager that manages the hardware resource.

16. The device according to any one of claims 10 to 15, wherein the hardware resource comprises at least one of: a central processing unit (CPU), a graphic processing unit (GPU), a neural processing unit (NPU), a memory, a storage, and a network bandwidth.

17. The device according to claim 16, wherein the minimum resource comprises at least one of: a predefined number of cores of the CPU, a predefined clock speed of the CPU, a predefined number of cores of the GPU, a predefined clock speed of the GPU, a predefined memory bandwidth of the GPU, a predefined number of cores of the NPU, a predefined clock speed of the NPU, a predefined amount of the memory, a predefined privilege for utilizing the memory, a predefined amount of the storage, a predefined privilege for utilizing the storage, and a predefined amount of network bandwidth.

18. The device according to any one of claims 10 to 17, wherein the processor (502) is further configured to execute the instructions to:
receive, from a user equipment via over-the-air (OTA), an instruction to update the resource profile (200); and
update at least a portion of the resource profile (200) based on the received instruction.

19. A computer program causing a processor (502) to perform a method to allocate a hardware resource in a vehicle, the method comprising:
receiving information associated with applications currently running in the vehicle, the applications being a portion of a plurality of applications;
receiving a resource profile (200), wherein the resource profile (200) comprises predefined mappings of the plurality of applications, a minimum resource required by each of the plurality of applications, and a priority level of each of the plurality of applications; and
allocating the hardware resource to the currently running applications based on the resource profile (200).

20. The computer program according to claim 19, wherein the allocating the hardware resource comprises:
determining, and based on the resource profile (200), whether all currently running applications have been allocated with the minimum resource; and
based on determining that any of the currently running applications have not been allocated with the minimum resource, allocating the hardware resource to the currently running applications that have not been allocated with the minimum resource.
